# EUROPÄISCHE PATENTSCHRIFT

(11) **EP 3 407 010 B1**
(45) Veröffentlichungstag und Bekanntmachung des Hinweises auf die Patenterteilung: **01.01.2020**
(21) Anmeldenummer: 18173845.1
(22) Anmeldetag: 23.05.2018
(51) Int. Cl.: G01B 11/22, G01B 11/25

(54) **VORRICHTUNG UND VERFAHREN ZUR MESSUNG DER PROFILTIEFE EINES REIFENS**
DEVICE AND METHOD FOR MEASURING DEPTH OF A TREAD OF A TIRE
DISPOSITIF ET PROCÉDÉ POUR MESURER LA PROFONDEUR DU PROFIL D'UN PNEU

(30) Priorität: 24.05.2017 DE 102017208839
(43) Veröffentlichungstag der Anmeldung: 28.11.2018
(73) Patentinhaber: Beissbarth GmbH, 80993 München (DE); CST GmbH, 79761 Waldshut-Tiengen (DE)
(72) Erfinder: FRITZ, Peter, 79664 Wehr (DE); HANNING, Tobias, 81245 München (DE)
(74) Vertreter: Schmitt-Nilson Schraud Waibel Wohlfrom Patentanwälte Partnerschaft mbB

(56) Entgegenhaltungen:
- DE-A1-102012 224 260
- DE-A1-102013 211 802
- US-A1- 2005 035 314

## Beschreibung

Die Erfindung betrifft eine Vorrichtung und ein Verfahren zur Messung der Profiltiefe wenigstens eines Reifens, insbesondere eines Kfz-Reifens.

### Stand der Technik

Zur Messung der Profiltiefe von Reifen sind verschiedene Verfahren zur manuellen oder automatischen Profiltiefenmessung, mechanisch oder berührungslos messende Verfahren, sowie Verfahren zur Messung bei stehendem oder bei rollendem Fahrzeug bzw. Reifen bekannt.

Triangulationsverfahren mit Laserscannern zur Profiltiefenmessung in einem Rollenprüfstand werden beispielsweise in DE 197 05 047 A1 und EP1 394 503 B1 beschrieben.

DE 43 16 984 beschreibt ein Verfahren zur Messung der Profiltiefe im Stand oder bei der Überfahrt über eine Messvorrichtung. Hierbei wird ein Triangulationssensor, der auf einem beweglichen Schlitten angeordnet ist, entlang einer Linie quer zur Abrollrichtung des Reifens verschoben.

WO 97/07380 A2 beschreibt die Anwendung eines Lichtschnittverfahrens mit einem oder mehreren Lichtschnitten zur Messung bei der Überfahrt, bei der sich die Messvorrichtung mit dem Fahrzeug mitbewegt.

DE 1 809 459 beschreibt ein Lichtschnittverfahren zur Messung der Profiltiefe bei der Überfahrt. Hierbei wird die Profiltiefe entlang einer einzelnen Linie parallel zur Drehachse des Reifens gemessen. Das Verfahren beruht im Wesentlichen auf der Untersuchung von Schatten des Profils, die von einer schräg einfallenden Lichtquelle erzeugt werden.

Die EP 04 69 948 A1 beschreibt ebenfalls eine Vorrichtung zur automatischen Ermittlung der Profiltiefe von Kraftfahrzeugen im fließenden Verkehr. Die Messvorrichtung befindet sich unter der Straßenoberfläche. Anstatt einer Lichtlinie quer zur Laufrichtung des Reifens werden mehrere Lichtpunkte gemessen und anhand von Leuchtdichteunterschieden der abgebildeten Punkte wird auf die Profiltiefe geschlossen. Zur Steigerung der Genauigkeit befinden sich mehrere Messeinrichtungen in Fahrtrichtung hintereinander.

DE 10 2009 016 498 A1 offenbart ein Verfahren zum Ermitteln der Profiltiefe eines Fahrzeugreifens, wobei der Reifen an einem Fahrzeug montiert ist, bei dem der Reifen über eine Messstation gerollt oder auf ihr abgestellt wird. Das Profil des Reifens wird auf mindestens einer Messlinie quer zur Rollrichtung des Reifens optisch abgetastet, wobei ein von einer Lichtquelle ausgehender Strahlenfächer an der Reifenoberfläche reflektiert wird und ein Signal des reflektierten Strahlenfächers von einem Sensor aufgenommen wird und das Signal des reflektierten Strahlenfächers mittels eines Triangulationsverfahrens ausgewertet wird.

DE 10 2006 062 447 A1 misst ebenfalls mittels eines Lichtschnitt-Triangulationsverfahrens einen Bereich des Reifenprofils während der Reifen über einem Spalt abrollt. Das Verfahren sieht vor, eine Beleuchtungslinie quer zur Abrollrichtung des Rades mit Hilfe eines mit hoher Geschwindigkeit rotierenden Prismas über die Profilfläche zu führen. Durch die sich parallel verschiebende Beleuchtungszeile kann der gesamte Ausschnitt des Reifens sequentiell und mit hoher Dichte abgetastet werden, während sich die auf dem Spalt befindliche Reifenoberfläche relativ zur Messvorrichtung im Ruhezustand befindet.

DE 10 2012 224260 A1 offenbart eine Vorrichtung zur Vermessung des Profils der Lauffläche eines Reifens hat mehrere Messmodule, die quer zur Laufrichtung des Reifens angeordnet und mit einer gemeinsamen Auswerteinrichtung verbunden sind, wobei jedes Messmodul wenigstens eine Beleuchtungseinrichtung, die so ausgebildet und angeordnet ist, dass sie im Betrieb wenigstens eine Lichtlinie auf das zu vermessende Profil projiziert, und wenigstens eine Bildaufnahmeeinrichtung, die zur Aufnahme wenigstens eines Bildes wenigstens eines Bereiches des zu vermessenden Profils ausgebildet ist, aufweist. Die wenigstens eine Beleuchtungseinrichtung und die wenigstens eine Bildaufnahmeeinrichtung sind so ausgebildet und angeordnet, dass die Beleuchtungsrichtung der Beleuchtungseinrichtung und die Bildaufnahmerichtung der Bildaufnahmeeinrichtung weder parallel zueinander noch orthogonal zur Lauffläche des Reifens ausgerichtet sind.

DE 10 2013 211 802 A1 beschreibt eine Anordnung zur Dynamikerhöhung bei der farbkodierten Triangulation durch Verwendung eines angepassten schmalbandigen Farbfilters. Spektrale Durchlassbereiche des Farbfilters überlappen mit empfindlichen Spektralbereichen eines Kamera-Sensors. Die spektralen Durchlassbereiche sind jedoch im Gegensatz zu den empfindlichen Spektralbereichen des Kamera-Sensors spektral disjunkt, so dass die transmittierten Farben in eindeutiger Weise zu identifizieren sind.

US 2005/035314 A1 beschreibt einen Entfernungsmesser zum Messen einer dreidimensionalen Geometrie eines Objekts. Der Entfernungsmesser umfasst eine Projektoreinheit zum Projizieren des Musterlichts auf das Objekt, eine erste Bilderfassungseinheit zum Erfassen eines von dem Objekt reflektierten Bildes, eine zweite Bilderfassungseinheit zum Erfassen eines reflektierten Bildes von dem Objekt, eine Anordnungseinheit zum Anordnen eines identischen Hauptpunkts und ein optisches Abbildungssystem. Vorzugsweise ist die zweite Bilderfassungseinheit so angeordnet, dass sie einen Hauptpunkt einnimmt, der sich optisch von dem Hauptpunkt der ersten Bilderfassungseinheit unterscheidet. Die Anordnungseinheit ordnet die Projektoreinheit und die erste Bilderfassungseinheit auf der Position eines optisch identischen Hauptpunkts an. Die Projektoreinheit und die erste Bilderfassungseinheit teilen sich das optische Abbildungssystem.

EP 0 469 948 B1, EP 1 952 092 B1 und US 7 578 180 B2 beschreiben weitere Varianten von Triangulationsverfahren zur Profilmessung bei der Überfahrt.

Es ist eine Aufgabe der Erfindung, eine verbesserte Vorrichtung und ein verbessertes Verfahren zur Messung der Profiltiefe eines Rades, insbesondere eines Kraftfahrzeuges, bereitzustellen, die für eine Vielzahl von Reifenbreiten geeignet sind, eine hohe Messgenauigkeit aufweisen und einfach zu bedienen bzw. auszuführen sind.

Die Aufgabe wird durch eine Vorrichtung nach dem unabhängigen Patentanspruch 1 und ein Verfahren nach dem unabhängigen Patentanspruch 6 gelöst. Die abhängigen Patentansprüche beschreiben mögliche Ausführungsformen einer erfindungsgemäßen Vorrichtung bzw. eines erfindungsgemäßen Verfahrens.

### Offenbarung der Erfindung

Eine erfindungsgemäße Vorrichtung zum Vermessen des Profils der Lauffläche eines Reifens weist mindestens ein Messmodul auf. Das Messmodul hat wenigstens eine Beleuchtungseinrichtung, die so ausgebildet und angeordnet ist, dass sie im Betrieb wenigstens zwei Lichtstreifen auf das zu vermessende Profil projiziert, und wenigstens eine Bildaufnahmeeinrichtung, die zur Aufnahme wenigstens eines Bildes wenigstens eines Bereiches des zu vermessenden Profils ausgebildet ist.

Ein Verfahren zum Vermessen des Profils der Lauffläche eines Reifens mit einer erfindungsgemäßen Vorrichtung umfasst die Schritte:
den zu vermessenden Reifen über die Vorrichtung zu rollen;
mit der wenigstens einen Beleuchtungseinrichtung jeweils wenigstens zwei Lichtstreifen auf das zu vermessende Profil zu projizieren, während es über die Vorrichtung rollt;
mit der wenigstens einen Bildaufnahmeeinrichtung jeweils wenigstens ein reflektiertes Bild des Profils aufzunehmen, während es über die Vorrichtung rollt; in den aufgenommenen Bildern die projizierten Lichtstreifen zu identifizieren; und die aufgenommenen Bilder der Lichtstreifen auszuwerten, um die Tiefe des Profils zu bestimmen.

Die wenigstens zwei Lichtstreifen weisen unterschiedliche Farben im Bereich des sichtbaren Lichtes auf.

Die wenigstens eine Beleuchtungseinrichtungis dazu ausgebildet ist, ein Muster, das mehrere Lichtstreifen umfasst, auf das Profil zu projizieren. Die wenigstens eine Beleuchtungseinrichtung weist wenigstens einen Transmissionskörper auf, der ausgebildet ist, ein solches Muster zu erzeugen. Durch den Einsatz eines Transmissionskörpers ist eine flexible Wahl von Mustern, welche Lichtstreifen unterschiedlicher Farbe und Breite umfassen, möglich.

Der Transmissionskörper ist so ausgebildet, dass die Farben der einzelnen Lichtstreifen durch die wenigstens eine Bildaufnahmeeinrichtung eindeutig unterscheidbar sind. Dies ermöglicht eine höhere Genauigkeit bei der Vermessung der Reifenoberfläche und der Tiefe des Profils.

Die Farben nebeneinander angeordneter Lichtstreifen weisen in einem 360° Farbkreis einen Farbwinkel von 60° auf. Dies ermöglicht höchste Genauigkeit bei der Unterscheidung der einzelnen Lichtstreifen durch eine Kamera und/oder einer nachgeordneten Auswertesoftware. Vorteilhaft ist hierbei insbesondere, wenn die Farben nebeneinander angeordneter Lichtstreifen in einem 360° Farbkreis einen stetig steigenden Farbwinkel von 60° beginnend bei 0° aufweisen.

Eine erfindungsgemäße Vorrichtung und ein erfindungsgemäßes Verfahren ermöglichen es, mit herkömmlichen Bauelementen, z.B. mit marktgängigen kostengünstigen Bildsensoren, insbesondere Flächenbildsensoren, eine robuste und komfortable Messung der Profiltiefe von Kraftfahrzeugreifen mit nahezu beliebiger Breite zu realisieren.

Durch die Verwendung von mindestens zwei Lichtstreifen oder eines Musters mit mehreren Lichtstreifen lassen sich die Robustheit der Messung und die Genauigkeit der Messergebnisse noch weiter verbessern.

Zusammenfassend weist die vorliegende Erfindung in den beschriebenen Ausführungsformen u. a. die folgenden Vorteile auf:
Die Erfindung stellt eine robuste Lösung zur Verfügung, die auch rauen Prüfbedingungen gewachsen ist. Die Vorrichtung weist keine bewegten Teile auf und vermeidet dadurch den Verschleiß an bewegten Teilen.

Durch den vorgeschlagenen Einbau in die Fahrbahn, auf der Fahrbahn oder in eine Überfahrschwelle kann eine erfindungsgemäße Vorrichtung einfach an einer Vielzahl von Stellen, insb. auch in Einfahrten, z.B. von Werkstätten, Tankstellen, Drive-In, Drive-Thru, Parkplätzen, eingesetzt werden.

Durch die Messung am rollenden Fahrzeug (Rad) wird eine für den Betreiber der Messstelle und für den Fahrer komfortable Lösung bereitgestellt.

Die Messung findet von unten statt, wodurch potentiell störende Lichteinflüsse der Umwelt minimiert werden. Schwankendes Umgebungslicht (Tag, Nacht, Sonne, Wolken, ...) wird durch eine optimierte Beleuchtung kompensiert. Durch Anpassung der Beleuchtungsintensität und Integrationszeit werden Unter- und Überbelichtungen vermieden.

Die Messung erfolgt quasi an einem statisch ruhenden Rad, dadurch werden Messfehler durch Bewegungsunschärfe vermieden.

Es wird eine hohe Messgenauigkeit erreicht. Durch die Generierung einer großen Anzahl an Lichtstreifen, die auf die Reifenoberfläche projiziert werden, wird eine hohe Abtastdichte erreicht, die eine sichere Erkennung von in das Profil integrierten Abriebindikatoren und von Objekten (z.B. verklemmte Steinchen) in den Profilrillen des Reifens, die das Messergebnis verfälschen könnten, ermöglicht.

Der Transmissionskörper ist auf vorteilhafter Weise so ausgebildet ist, dass ein Muster mit 5 bis 8, insbesondere 6 Lichtstreifen erzeugt wird, welches die Genauigkeit bei der Untersuchung des Profils erhöht.

Der Transmissionskörper kann kostengünstig als Prisma, Gitter, Oberflächenspiegel mit Farbaufdruck oder transparenter Kunststoff mit Farbaufdruck realisiert werden.

Die Lichtstreifen können eine unterschiedliche Breite aufweisen, wobei der Transmissionskörper als transparenter Kunststoff mit aufgedruckten Farbbereichen unterschiedlicher Breite ausgebildet ist, um eine Verzehrung der Lichtstreifen auf dem Reifenprofil vorteilhaft zu vermeiden.

Ausführungsbeispiele der Erfindung werden im Folgenden anhand der beigefügten Figuren näher erläutert.

Kurze Beschreibung der Figuren:
Figur 1 veranschaulicht in einer schematischen Darstellung das hier verwendete Messprinzip zur Profiltiefenmessung.
Figur 2 zeigt einen Farbkreis (HSV-Farbmodell), in dem die Farben nach Winkelpositionen geordnet sind.
Figur 3 zeigt eine schematische, perspektivische Ansicht eines Messplatzes zur Profiltiefenmessung.
Figur 4 zeigt eine Anordnung zur Messung der Profiltiefe in einer schematischen Seitenansicht.
Figur 5 zeigt einen Schnitt senkrecht zur Ebene der Fahrbahn durch das Zentrum des Reifens orthogonal zur Fahrtrichtung des Fahrzeugs.

### Figurenbeschreibung

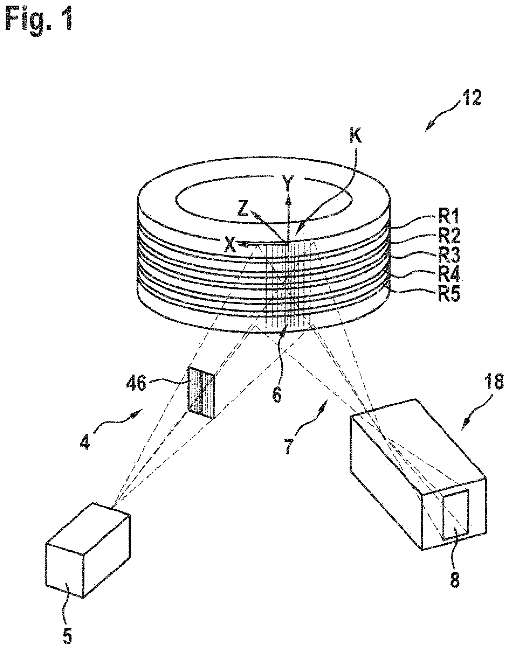

Figur 1 veranschaulicht in einer schematischen Darstellung das Messprinzip zur Profiltiefenmessung mit Hilfe des Lichtschnitt-Triangulationsverfahrens an einem Reifen 12 mit einer vereinfachten Darstellung des Profils des Reifens 12 mit fünf Längsrillen R1, R2, R3, R4, R5.

Ein Objektkoordinatensystem K ist so ausgerichtet, dass die Tiefenausdehnung des Profils parallel zur Z-Achse des Objektkoordinatensystems K ausgerichtet ist.

Eine Beleuchtungseinrichtung 4 mit einer Lichtquelle 5 projiziert mindestens zwei Lichtstreifen 6 auf die mit einem Profil ausgebildete Lauffläche des Reifens 12. Eine Bildaufnahmeeinrichtung 18 ist mit einem in der Figur 1 nicht gezeigten Objektiv und mit einem Bildsensor ausgestattet. Durch die unterschiedlichen Perspektive zwischen der Beleuchtungseinrichtung 4 und der Bildaufnahmeeinrichtung 18 und den Tiefenunterschied zwischen der Reifenlauffläche und dem Rillengrund werden die auf das Profil projizierten mindestens zwei Lichtstreifen 6 auf dem Flächenbildsensor 8 der Bildaufnahmeeinrichtung 18 in Form von gegeneinander versetzten Linienabschnitten abgebildet.

Die Beleuchtungseinrichtungen 4 weist wenigstens einen Transmissionskörper 46 auf, wobei der Transmissionskörper 46 ausgebildet ist, um bei Bestrahlung mit Licht aus der Lichtquelle 5 ein Muster von mindestens zwei Farbstreifen 6 zu erzeugen. Die Farbstreifen 6 sind vorzugsweise parallel zueinander ausgerichtet und können Trennstreifen aufweisen.

Die Farbstreifen 6 sollten Farben aufweisen, welche aus mehreren Linien zusammengesetzt sind und von Linie zu Linie gut unterscheidbar sind. Hierbei spielt die Farbauflösung der Bildaufnahmeeinrichtung 18 und die Art des DeBeyering eine relevante Rolle. Bevorzugt werden die Farben im Bereich des sichtbaren Lichtes ausgewählt.

Durch eine geeignete Farbwahl benachbarter Lichtstreifen 6 können ausgefranste Musterlinien im RGB/HSV/HSI- Bild vermieden werden, so dass die Lage der einzelnen Lichtstreifen 6 auf dem Profil gut zu identifizieren ist, um eine effiziente chromatische Triangulation durchzuführen. Hierbei sollte die Breite der Lichtstreifen 6 gering sein, um viele Streifen zu erzeugen, zum anderen sollten alle Übergänge zwischen den Lichtstreifen 6 in einem digitalen Bild stabil erkennbar sein.

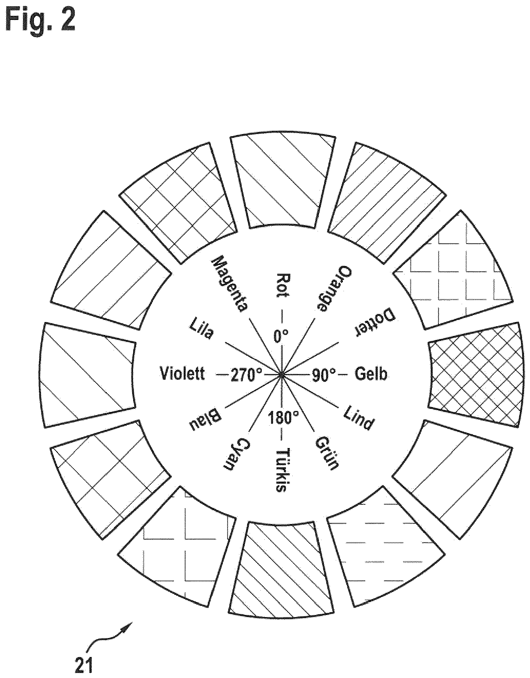

Die sichtbaren Farben lassen sich auf einem 360°Farbkreis 21 entsprechenden Winkelpositionen, wie in Figur 2 dargestellt, zuordnen. Hierbei wird der Farbwert als Farbwinkel H auf dem 360°Farbkreis 21 (etwa 0° für Rot, 120° für Lind (Grün), 240° für Blau) dargestellt. Auf dem 360°Farbkreis 21 haben bestimmte Farben immer einen vorgegebenen Winkelabstand. Beispielsweise befinden sich auf dem Farbkreis 21 Rot und Türkis 180° voneinander entfernt, Rot und Gelb 90 ° voneinander entfernt und Rot und Violett 240 ° voneinander entfernt.

In der Figur 2 sind nur die einzelnen Farben bei diskreten Winkelwerten von 0°, 30°, 60°. 90°, 120°, 150°, 180°, 210°, 240°, 270°, 300°, 330° dargestellt. Auf einem 360°Farbkreis 21 gibt es für jeden einzelnen Winkelwert jeweils eine entsprechende Farbe.

Der in Figur 2 dargestellte 360°Farbkreis 21 (HSV-Farbmodell) ordnet folgenden Farben beigefügte Winkelpositionen zu:

| | |
|---|---|
| Rot: | 0° |
| Orange: | 30° |
| Dotter: | 60° |
| Gelb: | 90° |
| Lind: | 120° |
| Grün: | 150° |
| Türkis: | 180° |
| Cyan: | 210° |
| Blau: | 240° |
| Violett: | 270° |
| Lila: | 300° |
| Magenta: | 330° |

Der Transmissionskörper 46 ist so ausgebildet sind, dass die Farben der einzelnen Lichtstreifen 6 durch die Bildaufnahmeeinrichtung 18 eindeutig unterscheidbar sind.

Es gibt einen kleinen Unschärfebereich zwischen den diskreten Farben, wenn diese in Lichtstreifen 6 mit steigender oder fallender Wellenlänge angeordnet sind. Die Pixel üblicher Farbsensoren können diese Art des Überganges mit geringem Rauschen von ca. 3-4 Pixeln abbilden. Bei Mustern mit Lichtstreifen 6, die von Farbe zu Farbe einen größeren Unterschied, z.B. von Rot nach Türkis erzeugen, ist dieser Bereich größer und liegt bei 5-6 Pixel. Die Grenze des Überganges, welcher zur exakten Messung benötigt wird, kann somit deutlich präziser bestimmt werden.

Das durch die Bildaufnahmeeinrichtung 18 aufgenommene Bild wird mit einem Farbsensor aufgenommen und die Übergänge zwischen den Farbstreifen werden statistisch ausgewertet.

Es können folgende Ansätze für die Farbauswahl genutzt werden:
1.) Die Farben der einzelnen nebeneinander angeordneter Lichtstreifen 6 weisen in einem 360°Farbkreis 21 einen maximalen Farbabstand auf Wenn Rot bei 0° liegt und Türkis bei 180° wird auf einen roten Streifen ein türkiser Streifen folgen. Dieser Ansatz wird aber nicht beansprucht.
2.) Die Farben nebeneinander angeordneter Lichtstreifen 6 weisen in einem 360°Farbkreis 21 einen Farbwinkel von 60° auf. Hierbei können die Farben nebeneinander angeordneter Lichtstreifen 6 in einem 360°Farbkreis 21 einen stetig steigenden Farbwinkel von 60° beginnend bei 0° aufweisen.

Bei Versuchen konnte gezeigt werden, dass ein stetig steigender Farbwinkel von 60° beginnend bei 0° deutlich besserer Ergebnisse der 2D-3D- Wandlung erbringt als bei einem maximalen Farbabstand.

Die Farbstreifen 6 werden erzeugt, indem Licht einer Lichtquelle 5 der Beleuchtungseinrichtung 4 durch den Transmissionskörper 46 gesendet wird, so dass Lichtstreifen 6 der gewählten Farbanordnung entstehen.

Der Transmissionskörper 46 kann ein Prisma, ein Gitter, ein Oberflächenspiegel mit Farbaufdruck oder ein transparenter Kunststoff mit Farbaufdruck sein. Die genannten Elemente sollten bei Bestrahlung mit Licht aus der Lichtquelle 5 das Mustern an Lichtstreifen 6 der gewählten Farbanordnung generieren. Die Breite und die Länge des Transmissionskörpers 46 gibt die jeweilige optische Konstruktion vor.

Der Transmissionskörper 46 kann so ausgebildet sein, dass ein Muster mit beliebig vielen Farbstreifen 6 erzeugt wird. Besonders vorteilhaft ist ein Muster mit fünf bis acht, insbesondere sechs Lichtstreifen 6.

Wird als Transmissionskörper 46 ein transparenter Kunststoff mit Farbaufdruck gewählt, so kann das Farbmuster in einer Tiff-Datei durch Farbbereiche, welche den gewünschten Lichtstreifen 6 entsprechen und auf den transparenten Kunststoff aufgebracht werden, generiert werden. Der transparente Kunststoff wird mit einem Laser-Belichter belichtet, chemisch entwickelt, zugeschnitten und dann in den Strahlengang der Lichtquelle 5 eingebracht. Als Material für den tranparenten Kuststoff bietet sich beispielsweise DuraClear ® an.

In Abhängigkeit von der Entfernung des jeweiligen Farbstreifens 6 zur Lichtquelle 5 treten Verzerrungen in der Breite der Lichtstreifen 6 auf dem Profil auf. Der mittlere Lichtstreifen 6 wird im Vergleich zu den Lichtstreifen 6 im Randbereich auf dem Profil schmaler abgebildet.

Deshalb kann der Transmissionskörper 46 so ausgebildet sein, dass die aufgedruckten Farbbereiche auf dem transparenten Kunststoff eine unterschiedliche Breite aufweisen, so dass keine Verzerrungen in der Breite der Lichtstreifen 6 auf dem Profil auftreten.

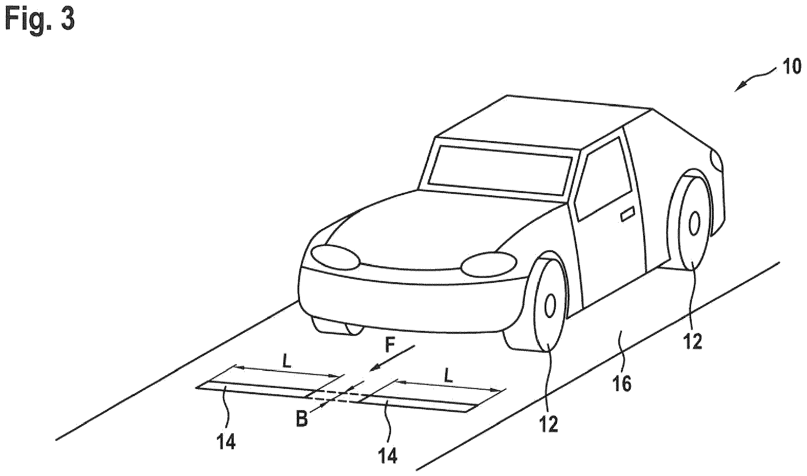

Figur 3 zeigt einen Messplatz mit einer Fahrbahn 16, in der zwei Schlitze 14 in der Spur eines sich in Fahrtrichtung F nähernden Fahrzeugs 10 ausgebildet sind. Die Messung findet statt, während das Fahrzeug 10 mit seinen Rädern bzw. Reifen 12 über wenigstens einen der länglichen Schlitze 14 fährt, die in der Fahrbahn 16 ausgebildet und in ihrer Längsausdehnung quer zur Laufrichtung der Reifen 12 des Kraftfahrzeugs 10 ausgerichtet sind.

Die Schlitze 14 haben quer zur Fahrtrichtung F des Fahrzeugs 10 eine Ausdehnung (Länge) L, die mindestens der Breite der maximalen Aufstandsfläche der zu vermessenden Reifen 12 entspricht. Zusätzlich ist jedoch die Varianz der Spurweiten der zu vermessenden Fahrzeuge 10 zu berücksichtigen, um eine automatische Vermessung einer möglichst großen Zahl unterschiedlicher Fahrzeugtypen zu ermöglichen. Wenn die Messvorrichtung auch für Nutzfahrzeuge geeignet sein soll, ist insbesondere auch die Varianz der Spurweiten und Reifenbreiten von Transportern und LKW mit oder ohne Doppelbereifung zu berücksichtigen.

Die Schlitze 14 ermöglichen es, die Messung der Profiltiefe in einem Teilbereich der Lauffläche des zu prüfenden Reifens 12 durchzuführen. Darüber hinaus entspricht eine Messung im Bereich der Aufstandsfläche des Reifens 12 quasi einer Messung in Ruhelage, denn jeder Punkt der Lauffläche des Reifens 12 bewegt sich während des Abrollens auf der Fahrbahn 16 entlang einer Zykloiden mit der physikalischen Eigenschaft, dass seine Geschwindigkeit im Aufstandspunkt Null ist. Das hat den Vorteil, dass keine zusätzliche Messunsicherheit durch Bewegungsunschärfe vorhanden ist.

Ein weiterer Vorteil der Messung des aufstehenden Reifenprofils von unten durch einen Schlitz 14 besteht darin, dass durch die Karosserie des Fahrzeugs 10 und den Reifen 12 selbst das Umgebungslicht zu einem großen Teil abgeschattet wird und die Messung dadurch weitgehend unabhängig von wechselnden Umgebungsbedingungen (wie z.B. Tag, Nacht, Sonne, Wolken, ...) ist.

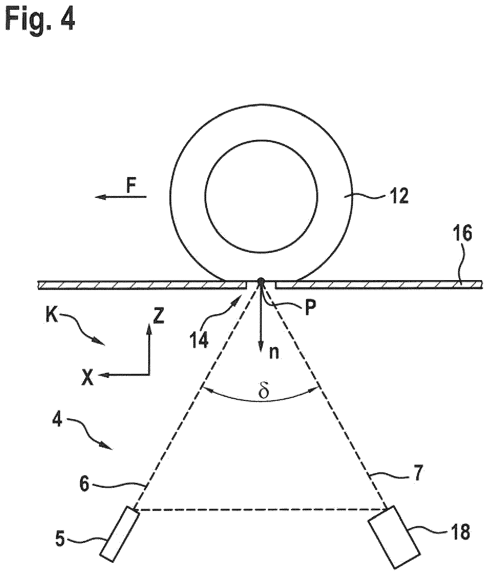

Figur 4 zeigt eine Anordnung zur Messung der Profiltiefe in einer schematischen Seitenansicht. Der Winkel δ bezeichnet den Winkel zwischen der Ebene 5, in der das Licht von der Beleuchtungseinrichtung 4 auf das Reifenprofil projiziert wird, und der Abbildungsebene 7 am Objektpunkt P.

Die gezeigte Anordnung der Beleuchtungseinrichtung 4 und der Bildaufnahmeeinrichtung 18 hat zusätzlich den Vorteil, dass die Einrichtungen 4, 18 gut vor ggf. durch den Schlitz 14 herabfallenden Schmutz geschützt sind.

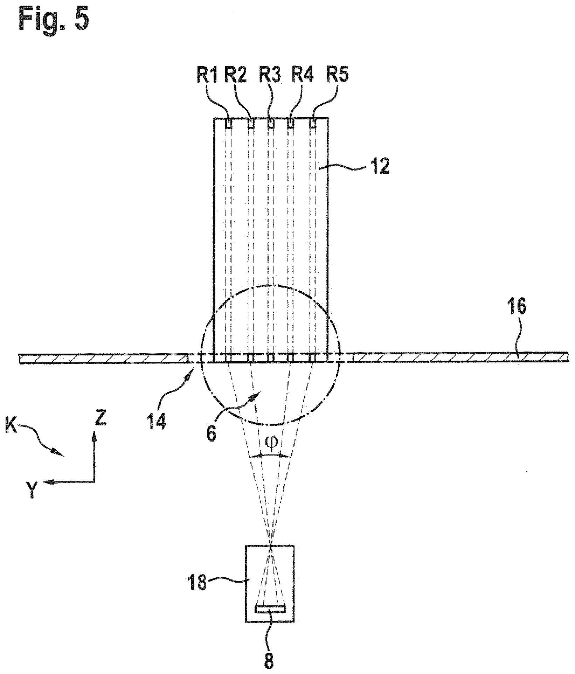

Figur 5 zeigt einen Schnitt senkrecht zur Ebene der Fahrbahn 16 durch die Mitte des Reifens 12 orthogonal zur Fahrtrichtung F des Fahrzeugs 10. Das Profil des Reifens 12 ist beispielhaft in vereinfachter Form mit fünf Längsrillen R1, R2, R3, R4, R5 dargestellt. Ein von der Lichtquelle 5 der Beleuchtungseinrichtung 4 auf das Profil des Reifens 12 projizierte Lichtstreifen 6 wird von dem Bildsensor 8 der Bildaufnahmeeinrichtung 18 aufgenommen.

Die Messgenauigkeit kann auch durch eine Erhöhung der Anzahl der auf das Profil projizierten Lichtstreifen 6 gesteigert werden. Anstatt einen kompletten Rillengrund mit einem einzigen Lichtstreifen 6 zu vermessen, können mehrere Lichtstreifen 6 ein genaueres Messergebnis erbringen. Die Genauigkeit und die Robustheit der Profiltiefenmessung können durch eine Erhöhung der Anzahl der auf das Profil projizierten Lichtstreifen 6 weiter gesteigert werden. Hierbei kann ein Muster mit 5 bis 8, insbesondere 6 Lichtstreifen erzeugt werden.

Mit der bisher beschriebenen Vorrichtung kann die Tiefe des Profils mit einem Auswertealgorithmus, welcher die chromatische Triangulation einsetzt, bestimmt werden. Es werden dazu folgende Verfahrensschritte durchgeführt:
1.) Der zu vermessenden Reifen 12 wird über die Vorrichtung gerollt;
2.) Mit der Beleuchtungseinrichtung 4 werden wenigstens zwei Lichtstreifen 6 auf die Lauffläche des zu vermessenden Reifens 12 projiziert;
3.) Mit der Bildaufnahmeeinrichtung 18 wird wenigstens ein reflektiertes Bild der Lauffläche aufgenommen;
4.) Die Lichtstreifen 6 in den aufgenommenen Bildern werden identifiziert;
5.) Die aufgenommenen Bilder der Lichtstreifen 6 werden ausgewertet, um die Tiefe des Profils zu bestimmen.

## Patentansprüche

1. Vorrichtung zum Vermessen des Profils der Lauffläche eines Reifens (12) mit einem Messmodul (26), das
wenigstens eine Beleuchtungseinrichtung (4), die so ausgebildet und angeordnet ist, dass sie im Betrieb ein Muster, das mehrere Lichtstreifen (6) umfasst, auf das zu vermessende Profil projiziert, und
wenigstens eine Bildaufnahmeeinrichtung (18), die zur Aufnahme wenigstens eines Bildes wenigstens eines Bereiches des zu vermessenden Profils ausgebildet ist, aufweist,
wobei die wenigstens zwei Lichtstreifen (6) unterschiedliche Farben im Bereich des sichtbaren Lichtes aufweisen,
wobei die wenigstens eine Beleuchtungseinrichtung (4) wenigstens einen Transmissionskörper (46) aufweist, der ausgebildet ist, um das Muster zu erzeugen, und
wobei der Transmissionskörper (46) so ausgebildet ist, dass die Farben der einzelnen Lichtstreifen (6) durch die wenigstens eine Bildaufnahmeeinrichtung (18) eindeutig unterscheidbar sind,
**dadurch gekennzeichnet, dass** die Farben nebeneinander angeordneter Lichtstreifen (6) in einem 360° Farbkreis (21) einen Farbwinkel von 60° aufweisen.

2. Vorrichtung nach Anspruch 1, wobei die Farben nebeneinander angeordneter Lichtstreifen (6) in einem 360° Farbkreis (21) einen stetig steigenden Farbwinkel von 60° beginnend bei 0° aufweisen.

3. Vorrichtung nach einem der vorherigen Ansprüche, wobei der Transmissionskörper (46) so ausgebildet ist, dass ein Muster mit 5 bis 8, insbesondere 6 Lichtstreifen (6) erzeugt wird.

4. Vorrichtung nach einem der vorangehenden Ansprüche, wobei der Transmissionskörper (46) ein Prisma, ein Gitter, ein Oberflächenspiegel mit Farbaufdruck oder ein transparenter Kunststoff mit Farbaufdruck ist.

5. Vorrichtung nach Anspruch 4, wobei der Transmissionskörper (46) als transparenter Kunststoff mit aufgedruckten Farbbereichen unterschiedlicher Breite ausgebildet ist.

6. Verfahren zum Vermessen des Profils der Lauffläche eines Reifens (12) mit einer Vorrichtung nach einem der vorangehenden Ansprüche, wobei das Verfahren umfasst:
den zu vermessenden Reifen (12) über die Vorrichtung zu rollen;
mit der wenigstens einen Beleuchtungseinrichtung (4) wenigstens zwei Lichtstreifen (6) auf die Lauffläche des zu vermessenden Reifens (12) zu projizieren;
mit der wenigstens einen Bildaufnahmeeinrichtung (18) wenigstens ein reflektiertes Bild der Lauffläche aufzunehmen;
die Lichtstreifen (6) in den aufgenommenen Bildern zu identifizieren;
die aufgenommenen Bilder der Lichtstreifen (6) auszuwerten, um die Tiefe des Profils zu bestimmen.

## Claims

1. A device for measuring the tread profile of a tire (12) by means of a measuring module (26) comprising
at least one illumination means (4) which is designed and arranged such that it projects a pattern including a plurality of light stripes (6) onto the profile to be measured during operation,
and at least one image recording means (18) which is designed to capture at least one image of at least a portion of the profile to be measured,
the at least two light stripes (6) having different colors in the range of the visible light,
the at least one illumination means (4) comprising at least one transmission body (46) which is adapted to create said pattern, and
the transmission body (46) being formed such that the colors of the individual light stripes (6) are clearly distinguishable by the at least one image recording means (18),
**characterized in that** the colors of juxtaposed light stripes (6) in a 360° color circle (21) have a color angle of 60°.

2. The device according to claim 1,
wherein the colors of juxtaposed light stripes (6) in a 360° color circle (21) have a steadily increasing color angle of 60° starting at 0°.

3. The device according to any of the preceding claims,
wherein the transmission body (46) is formed such that a pattern with 5 to 8, in particular 6 light stripes (6) is generated.

4. The device according to any of the preceding claims,
wherein the transmission body (46) is a prism, a grating, a surface mirror with color imprint or a transparent plastic with color imprint.

5. The device according to claim 4,
wherein the transmission body (46) is formed as a transparent plastic with printed color areas of different widths.

6. A method of measuring the tread profile of a tire (12) with a device according to any of the preceding claims,
the method comprising:
rolling the tire (12) to be measured across the device;
projecting, by means of the at least one illumination means (4), at least two light stripes (6) onto the tread of the tire (12) to be measured;
capturing, by means of the at least one image recording means (18), at least one reflected image of the tread;
identifying the light stripes (6) in the captured images;
evaluating the captured images of the light stripes (6) in order to determine the depth of the profile.

## Revendications

1. Procédé de mesurage du profil de la surface de roulement d'une roue (12) avec un module de mesurage (26), lequel comporte
au moins un équipement d'éclairage (4) conçu et agencé de telle façon que, lors du fonctionnement, il projette sur le profil à mesurer un motif comprenant plusieurs bandes de lumière (6), et
au moins un équipement de capture d'images (18) conçu pour capturer au moins une image d'au moins une zone du profil à mesurer,
cependant que les au moins deux bandes de lumière (6) présentent différentes couleurs dans la plage de la lumière visible,
cependant que le au moins un équipement d'éclairage (4) comporte au moins un corps de transmission (46) conçu pour générer le motif, et
cependant que le corps de transmission (46) est conçu de telle façon que les couleurs de bandes de lumière (6) individuelles sont univoquement différentiables par le au moins un équipement de capture d'images (18),
**caractérisé en ce que** les couleurs de bandes de lumière (6) juxtaposées présentent dans un cercle chromatique de 360° (21) un angle chromatique de 60°.

2. Dispositif selon la revendication 1, cependant que les couleurs de bandes de lumière (6) juxtaposées présentent dans un cercle chromatique de 360° (21) un angle chromatique de 60° croissant constamment commençant à 0°.

3. Dispositif selon une des revendications précédentes, cependant que le corps de transmission (46) est conçu de telle façon qu'un motif ayant entre 5 et 8, en particulier 6 bandes de lumière (6) est généré.

4. Dispositif selon une des revendications précédentes, cependant que le corps de transmission (46) est un prisme, une grille, un miroir de surface à impression en couleur ou une matière plastique transparente à impression en couleur.

5. Dispositif selon la revendication 4, cependant que le corps de transmission (46) est réalisé sous forme de matière plastique transparente ayant des zones en couleur imprimées de différente largeur.

6. Procédé de mesurage du profil de la surface de roulement d'une roue (12) avec un dispositif selon une des revendications précédentes, cependant que le procédé comprend :
rouler au-dessus du dispositif la roue (12) à mesurer ;
avec le au moins un équipement d'éclairage (4), projeter au moins deux bandes de lumière (6) sur la surface de roulement de la roue (12) à mesurer ;
avec le au moins un équipement de capture d'images (18), capturer au moins une image réfléchie de la surface de roulement ;
identifier les bandes de lumière (6) dans l'image capturée ;
évaluer les images capturées des bandes de lumière (6) afin de déterminer la profondeur du profil.
